(19) Europäisches Patentamt
European Patent Office
Office européen des brevets

(11) **EP 0 980 483 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.[7]: **F16H 61/00**, B60K 41/04

(21) Anmeldenummer: **98962272.5**

(22) Anmeldetag: **16.11.1998**

(86) Internationale Anmeldenummer:
**PCT/DE1998/003365**

(87) Internationale Veröffentlichungsnummer:
**WO 1999/034136 (08.07.1999 Gazette 1999/27)**

(54) **SYSTEM ZUR EINSTELLUNG EINER GETRIEBEÜBERSETZUNG**

SYSTEM FOR REGULATING A GEAR TRANSMISSION RATIO

SYSTEME DE REGLAGE DU RAPPORT DE TRANSMISSION D'UNE BOITE DE VITESSES

(84) Benannte Vertragsstaaten:
**BE DE FR GB IT**

(30) Priorität: **23.12.1997 DE 19757328**

(43) Veröffentlichungstag der Anmeldung:
**23.02.2000 Patentblatt 2000/08**

(73) Patentinhaber:
• **ROBERT BOSCH GMBH**
  **70442 Stuttgart (DE)**
• **Van Doorne's Transmissie B.V.**
  **5000 AM Tilburg (NL)**

(72) Erfinder:
• **LÖFFLER, Jürgen**
  **D-71364 Winnenden (DE)**
• **BOLZ, Martin-Peter**
  **D-71720 Oberstenfeld (DE)**
• **HÜLSER, Holger**
  **D-70329 Stuttgart (DE)**
• **VEENHUIZEN, Bram**
  **NL-5051 ED Goirle (NL)**

(56) Entgegenhaltungen:
**DE-A- 2 848 595      DE-A- 4 235 881**
**US-A- 4 653 006**

**Beschreibung**

Stand der Technik

Die Erfindung betrifft ein System zur Einstellung einer Getriebeübersetzung mit den Merkmalen des Anspruchs 1.

Aus dem Stand der Technik sind viele Möglichkeiten bekannt, die Übersetzung eines Kraftfahrzeuggetriebes zur Einstellung einer bestimmten Solldrehzahl des Fahrzeugmotors vorzunehmen. So wird in der US 4,893,526 aus der Fahrzeugslängsgeschwindigkeit und der Stellung des vom Fahrer betätigten Fahrpedals ein Sollabtriebsmoment bestimmt, woraufhin abhängig von dem Sollabtriebsmoment und der Fahrzeuglängsgeschwindigkeit ein Sollwert für die Motordrehzahl ermittelt wird. Dieser Sollwert für die Motordrehzahl wird durch die Verstellung eines kontinuierlich verstellbaren Fahrzeuggetriebes eingestellt. Darüber hinaus wird das Sollabtriebsmoment sowie die eingestellte Getriebeübersetzung zur Einstellung des Motormoments herangezogen.

Die WO 95 20114 A beschreibt eine Steuerung für ein automatisches Kraftfahrzeug-Getriebe, bei dem durch eine Fuzzy-Logik-Steuerschaltung durch stufenloses Regeln der Getriebeübersetzung die Motordrehzahl automatisch auf den Bereich optimalen Wirkungsgrades, minimaler Abgasemission oder maximaler Leistung eingestellt werden soll. Hierbei steht der Wirkungsgrad des Fahrzeugmotors im Vordergrund. Der Einfluß des Getriebewirkungsgrades auf den Gesamtwirkungsgrad des Antriebstrangs wird nicht berücksichtigt.

Aus der DE 28 48 595 A1 ist ein System zur Einstellung eines zwei Hydrostaten umfassenden Getriebes bekannt, das eine übersetzungsabhängige Wirkungsgradcharakteristik aufweist, bei dem eine die aktuelle Getriebeausgangsdrehzahl repräsentierende erste Größe und erfasst wird und eine einen Sollwert für das Antriebsmoment repräsentierende zweite Größe ermittelt wird und abhängig von der erfassten ersten und der ermittelten zweiten Größe und abhängig von der Wirkungsgradcharakteristik eine Soll-Druckdifferenz zwischen zwei die beiden Hydrostaten miteinander verbindenden Leitungen bestimmt wird und abhängig von der Soll-Druckdifferenz die Übersetzung des Getriebes eingestellt wird.

Der Erfindung liegt die Aufgabe zugrunde, zur Optimierung des Antriebstanges die Einstellung des Getriebes besser an die jeweilige Fahrsituation bzw. den jeweiligen Fahrzustand anzupassen.

Diese Aufgabe wird durch kennzeichnenden Merkmale des Anspruchs 1 gelöst.

Vorteile der Erfindung

Die Erfindung geht aus von einem System zur Einstellung eines in seiner Übersetzung veränderbaren Kraftfahrzeuggetriebes, wobei das Getriebe eine übersetzungsabhängige Wirkungsgradcharakteristik aufweist und eine die aktuelle Getriebeausgangsdrehzahl repräsentierende erste Größe erfaßt wird sowie eine einen Sollwert für das Antriebsmoment repräsentierende zweite Größe ermittelt wird und wenigstens abhängig von der erfaßten ersten und der ermittelten zweiten Größe und abhängig von der Wirkungsgradcharakteristik des Getriebes eine Soll-Drehzahl des Fahrzeugmotors bestimmt wird. Erfindungsgemäß geschieht die Bestimmung der Soll-Drehzahl des Fahrzeugmotors derart, daß für Kombinationen aus der erfaßten ersten und der ermittelten zweiten Größe eine Soll-Drehzahl ermittelt wird, bei der wenigstens ein Fahrzeugmotorparameter wie Kraftstoffverbrauch, Momentenreserve und/oder Abgasemission im minimalen oder maximalen Sinne optimiert ist. Die Einstellung der Getriebeübersetzung geschieht dann abhängig von der so bestimmten Soll-Drehzahl des Fahrzeugmotors. Vorteilhaft wird so durch eine koordinierte Antriebstrangsteuerung für ein vom Fahrer gewünschtes Antriebsmoment eine optimale Getriebeübersetzung und das erforderliche Motorausgangsmoment ermittelt. Die Komponenten Motor und Getriebe des Antriebstranges werden entsprechend angesteuert, so daß das geforderte Antriebsmoment zur Verfügung gestellt wird und durch Optimierung des Gesamtwirkungsgrades, der Momentenreserve und/oder anderer Optimierungskriterien der Antriebstrang den Bedürfnissen besser angepasst wird.

Vorteilhafte Weiterentwicklungen der Erfindung sind in den abhängigen Ansprüchen beschrieben.

Die Bestimmung der Soll-Drehzahl kann durch wenigstens ein Kennfeld geschehen.

Zur Bestimmung der Soll-Drehzahl des Fahrzeugmotors oder zur Ermittlung des Kennfeldes wird vorteilhafterweise die Momentenverstärkungs- und/oder Wirkungsgradcharakteristika des Getriebes für unterschiedliche Getriebeübersetzungen herangezogen.

Die Momentenverstärkungs und/oder Wirkungsgradcharakteristika können dabei im allgemeinen die Momentenverstärkung und/oder den Wirkungsgrad des Getriebes in Abhängigkeit von der ersten und zweiten Größe beinhalten. Dabei liegen die Momentenverstärkungs und/oder Wirkungsgradcharakteristika vorteilhafterweise als Kennfelder vor.

Insbesondere für ein kontinuierlich in seiner Übersetzung veränderbares Getriebe ist vorgesehen, daß die Bestimmung der Soll-Drehzahl des Fahrzeugmotors oder die Ermittlung des Kennfeldes derart geschieht, daß aus den vorliegenden Kennfeldern des Getriebes (Momentenverstärkungs und/oder Wirkungsgradcharakteristika) für unterschiedliche Getriebeübersetzungen die zugehörigen Momentenverstärkungen und/oder Wirkungsgrade des Getriebes ermittelt werden. Zwischen diesen ermittelten Momentenverstärkungen und/oder Wirkungsgraden wird dann interpoliert.

In einer besonders bevorzugten Ausführungsform der Erfindung ist vorgesehen, daß der zu optimierende Parameter des Fahrzeugmotors als Motorkennfeld in Abhängigkeit von wenigstens der Motordrehzahl und des Motorausgangsmoments vorliegt. Das erfindungsgemäße Vorgehen ist dann wie folgt:

- Für unterschiedliche Getriebeübersetzungen werden zu unterschiedlichen ersten und zweiten Größen mittels der Momentenverstärkungs und/oder Wirkungsgradcharakteristika die zugehörigen Momentenverstärkungen und/oder die zugehörigen Wirkungsgrade ermittelt.
- Unter Berücksichtigung der ermittelten zugehörigen Momentenverstärkungen und/oder zugehörigen Wirkungsgrade werden dann die zu der ersten Größe gehörigen Motorausgangsmomente für die unterschiedlichen Getriebeübersetzungen ermittelt.
- Mittels des vorliegenden Motorkennfeldes werden Werte des zu optimierenden Parameters ermittelt und die so ermittelten Werte zur Bestimmung der Soll-Drehzahl des Fahrzeugmotors herangezogen.

Die zweite Größe wird wenigstens in vorgebbaren Betriebszuständen vorzugsweise abhängig von einer die Stellung des vom Fahrer betätigten Fahrpedals repräsentierenden Größe ermittelt. Der zu optimierende Fahrzeugmotorparameter kann wählbar ausgelegt sein.

Weitere vorteilhafte Ausgestaltungen der Erfindung sind den Unteransprüchen zu entnehmen.

Zeichnung

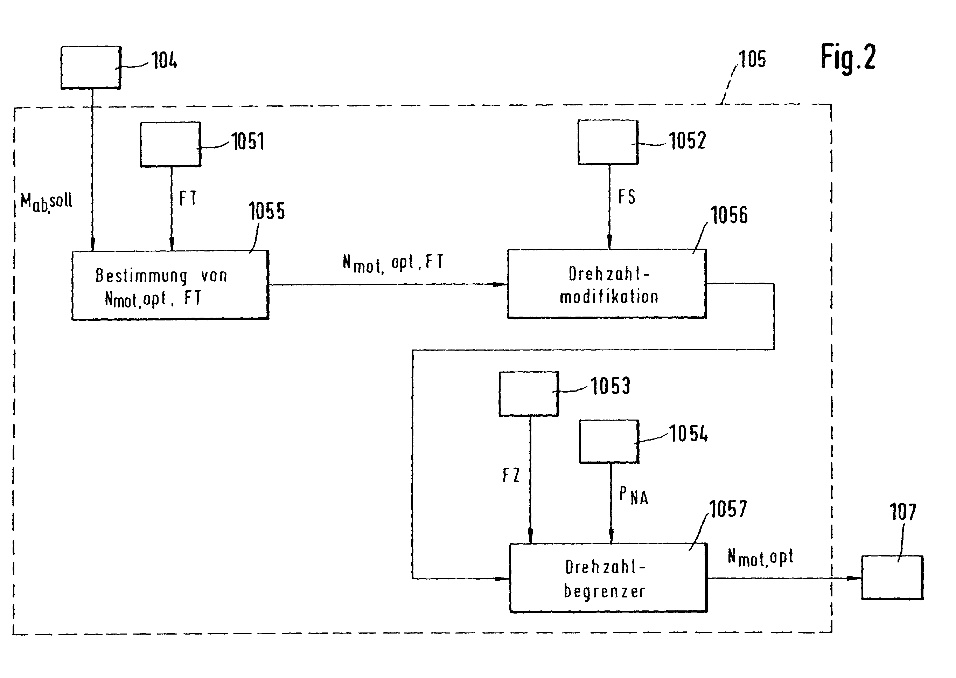

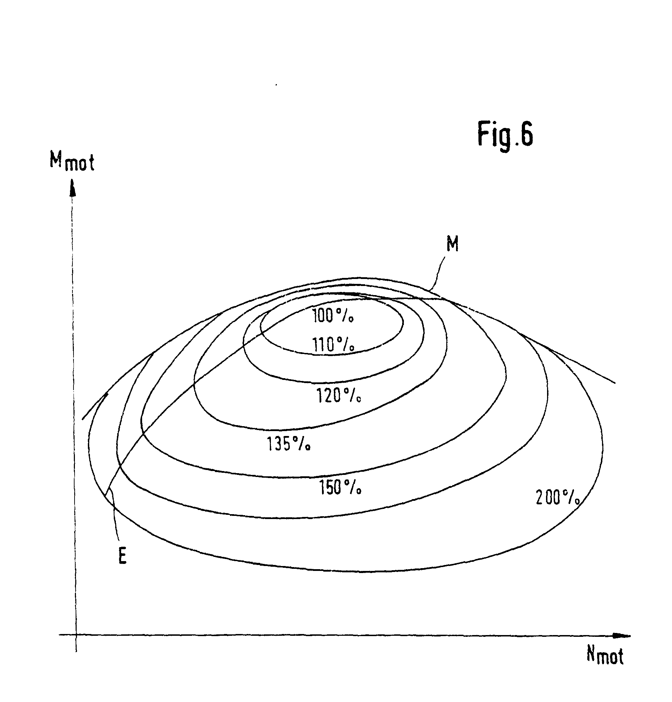

Die Figur zeigt ein Übersichtsblockschaltbild einer koordinierten Antriebsstrangsteuerung, während die Figuren 2, 3, 4 und 5 die erfindungsgemäße Vorgehensweise anhand von Blockbildern beschreiben. In der Figur 6 ist ein Motorkennfeld zu sehen.

Ausführungsbeispiele

Die Erfindung soll anhand des im folgenden zu beschreibenden Ausführungsbeispiels erläutert werden.

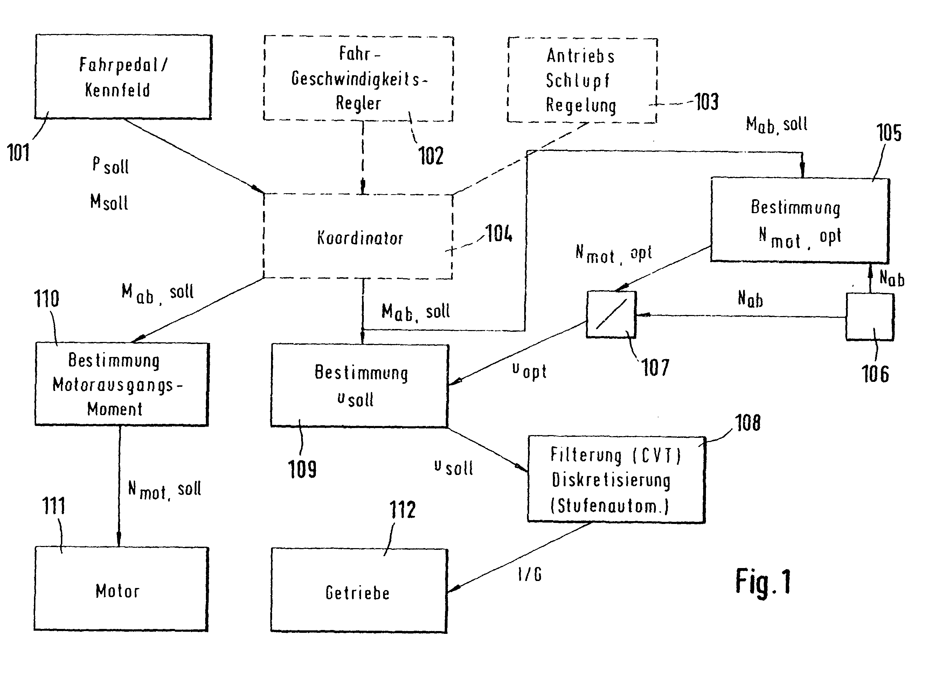

Die Figur 1 zeigt mit dem Block 101 die Ermittelung eines Sollwertes $P_{soll}$ bzw. $M_{soll}$ für die Vortriebsleistung bzw. für das Vortriebsmoment. Dieser Sollwert wird im wesentlichen direkt oder indirekt (beispielsweise mittels eines Kennfeldes oder mittels eines Algorithmus) aus der Stellung des vom Fahrer betätigten Fahrpedals ermittelt. Optional sind mit den Blöcken 102 und 103 ein Fahrgeschwindigkeitsregler und ein Antriebsschlupfregelsystem gekennzeichnet. Diese Systeme können zur Einstellung einer bestimmten Fahrzeuglängsgeschwindigkeit bzw. zur Verhinderung eines übermäßigen Antriebschlupfes den vom Fahrer vorgegebenen Sollwert modifizieren. Diese Modifikation findet im Koordinator 104 statt. Der Koordinator 104 liefert dann ausgangsseitig einen Sollwert $M_{ab,soll}$ für das Antriebsmoment. Im einfachsten Fall, gibt der Fahrer über das Fahrpedal das Sollabtriebsmoment $M_{ab,soll}$ direkt vor.

Dieser Sollwert für das Abtriebsmoment wird im Block 110 zu einem Motormomentsollwert $M_{mot,soll}$ verarbeitet und am Motor 111 eingestellt. Im Block 109 wird die Sollübersetzung $u_{soll}$ unter anderem abhängig von diesem Sollabtriebsmomentenwunsch $M_{ab,soll}$ bestimmt. Die entsprechende Soll-Getriebeübersetzung $u_{soll}$ wird dem Getriebe bzw. der Getriebesteuerung 112 direkt oder indirekt (Block 108) zur Einstellung zugeführt. Der Block 108 beschreibt dabei eine bei einem kontinuierlich veränderbaren Getriebe übliche Filterung oder im Falle eines Stufenautomatikgetriebes eine Diskretisierung der Sollübersetzung $u_{soll}$.

Im Block 105 wird als ein Schwerpunkt der Erfindung eine optimale Motordrehzahl $N_{mot,opt}$ in noch zu beschreibender Weise bestimmt. Im Block 107 wird dieser Wert durch Division mit der Abtriebsdrehzahl $N_{ab}$ (Drehzahlsensor 106) zu einer optimalen Übersetzung $u_{opt}$ verarbeitet und der schon beschriebenen Einheit 109 zugeführt.

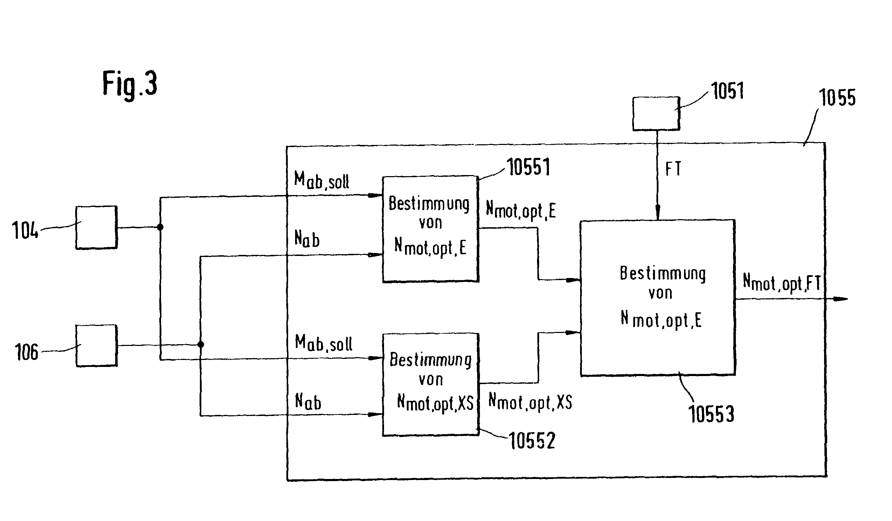

Die Figur 2 zeigt die genauere Funktion des Blocks 105 der Figur 1. Hierzu wird im Block 1055 abhängig von dem im Block 1051 bestimmten Fahrertyp und optional abhängig von dem vom Fahrer vorgegebenen Vortriebswunsch $M_{soll}$ (Block 104) eine optimale Motordrehzahl $N_{mot,opt,FT}$ gebildet. Wie schon erwähnt wird der den Fahrertyp bzw. die Fahrereigenschaft repräsentierende Wert FT im Block 1051 gebildet. Hierzu wird insbesondere die Stellung des vom Fahrer betätigbaren Fahrpedals, insbesondere das zeitliche Verhalten, ausgewertet. Zum Übertragungsverhalten des Blocks 1055 soll zunächst auf die Figur 3 eingegangen werden.

In diesem Ausführungsbeispiel werden zur Ermittlung 105 der optimalen Motordrehzahl $N_{mot,opt}$ im Block 1055 zunächst Motordrehzahlen $N_{mot,opt,E}$ und $N_{mot,opt,XS}$ für einen verbrauchsoptimalen und für einen fahrleistungsorientierten Fahrzeugbetrieb gebildet (Blöcke 10551 und 10552 in Fig.3). Selbstverständlich können auch andere oder weitere, in Bezug auf andere Parameter (z.B. Abgasemission) optimierte Motordrehzahlen ermittelt werden. Weiterhin sind beliebig viele weitere Abstufungen zwischen einer sehr verbrauchsoptimierten Motordrehzahl und einer sehr fahrleistungsoptimierten Motordrehzahl möglich.

Im Block 10553 wird dann abhängig von dem im Block 1051 ermittelten Fahrertyp beziehungsweise Fahrzustand einer der in den Blöcken 110551 und 10552 ermittelten Motordrehzahlen als Soll-Motordrehzahl $N_{mot,opt,FT}$ ausgewählt.

Die Bestimmung der Soll-Motordrehzahlen $N_{mot,opt,E}$ und $N_{mot,opt,XS}$ kann mittels Kennfelder erfolgen, durch die Soll-Motordrehzahlen $N_{mot,opt,E}$ und $N_{mot,opt,XS}$ in Abhängigkeit von $N_{ab}$- und $M_{ab,soll}$-Werten gespeichert sind. In diesen Kennfeldern ist sowohl die Verbrauchscharakteristik des Motors als auch das Wissen über den jeweiligen Wirkungsgrad des Getriebes repräsentiert.

Die Ermittlung der Kennfelder kann durch eine noch zu beschreibende Offline-Optimierungsrechnung erfolgen. Es kann aber auch vorgesehen sein, daß die Ermittlung der Motordrehzahl-Sollwerte $N_{mot,opt,E}$ und $N_{mot,opt,XS}$ durch die zu beschreibende Optimierungsrechnung online erfolgt.

Neben den Kennfeldern des Getriebes bilden Kennfelder mit der Charakteristik des Fahrzeugmotors die Grundlage für die im folgenden beschriebenen Bestimmungen. Dabei wird zunächst die Bestimmung der Motordrehzahlwertes $N_{mot,opt,E}$ im Block 10551 näher beschrieben.

Im Block 10551 wird für ein Tupel beziehungsweise für ein Wertepaar ($M_{ab,soll}$, $N_{ab}$) der Motordrehzahlwert

$$N_{mot,opt,E} = F(M_{ab,soll}, N_{ab})$$

bestimmt. Dabei wird der Wert $N_{mot,opt,E}$ für die Motordrehzahl derart bestimmt, daß sich die optimale Getriebeübersetzung $u_{opt}$ so ergibt, daß der effektive Kraftstoffverbrauch $b_{e,eff}$ minimal wird. Zur Bestimmung der Werte $N_{mot,opt,E}$ wird für jedes Tupel ($M_{ab,soll}$, $N_{ab}$) zunächst $u_{opt}$ bestimmt.

Dazu wird die Getriebeübersetzung u in einem Bereich zwischen der minimal und maximal möglichen Übersetzung ($u_{min}$, $u_{max}$)

$$u_{min} \leq u \leq u_{max}$$

in diskreten Schritten variiert, wodurch sich die Übersetzungen $u_k$(k=1,.....,K) ergeben. Für diskret schaltende Getriebe, das heißt für stufenweise bzgl. der Getriebeübersetzungen veränderbare Getriebe, ist es sinnvoll, als $u_k$ die Übersetzungsstufen der Getriebegänge zu wählen. Für stufenlos bzgl. ihrer Übersetzungen verstellbare Getriebe ist eine für die numerische Genauigkeit des Ergebnisses hinreichende Anzahl von Werten $u_k$ vorzugeben.

Für jeden Wert $u_k$ läßt sich aus dem Kennfeld des Getriebes die Momentenverstärkung $\mu_k$ als Funktion von $M_{ab,soll}$ und $N_{ab}$ ermitteln. In dem Wert $\mu_k$ ist der Wirkungsgrad $\eta_g$ des Getriebes schon enthalten, da gelten soll:

$$\mu_k = u_k * \eta_g$$

Das bei der Momentenverstärkung $\mu_k$ erforderliche Soll-Motorausgangsmoment ist

$$M_{mot,soll,k} = \frac{M_{ab,soll}}{\mu_k},$$

die Motorausgangsdrehzahl

$$N_{mot,k} = N_{ab} * u_k.$$

Für die in einer Situation geforderte Leistung $P_{ab,soll}$ an den Fahrzeugrädern, die sich aus dem Produkt $M_{ab,soll} * N_{ab}$ ergibt, läßt sich mit den oben genannten Eingangsgrößen der Verbrauch $b_{e\_t,k}$ an Kraftstoff je Zeiteinheit ermitteln zu

$$be\_t,k = F(M_{mot,soll,k}; N_{mot,k}).$$

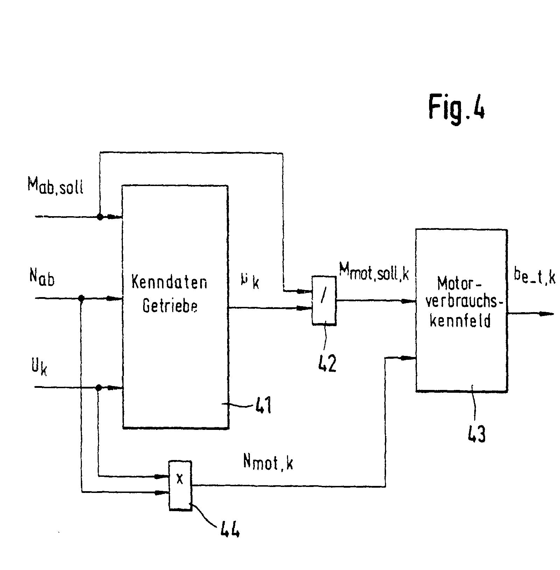

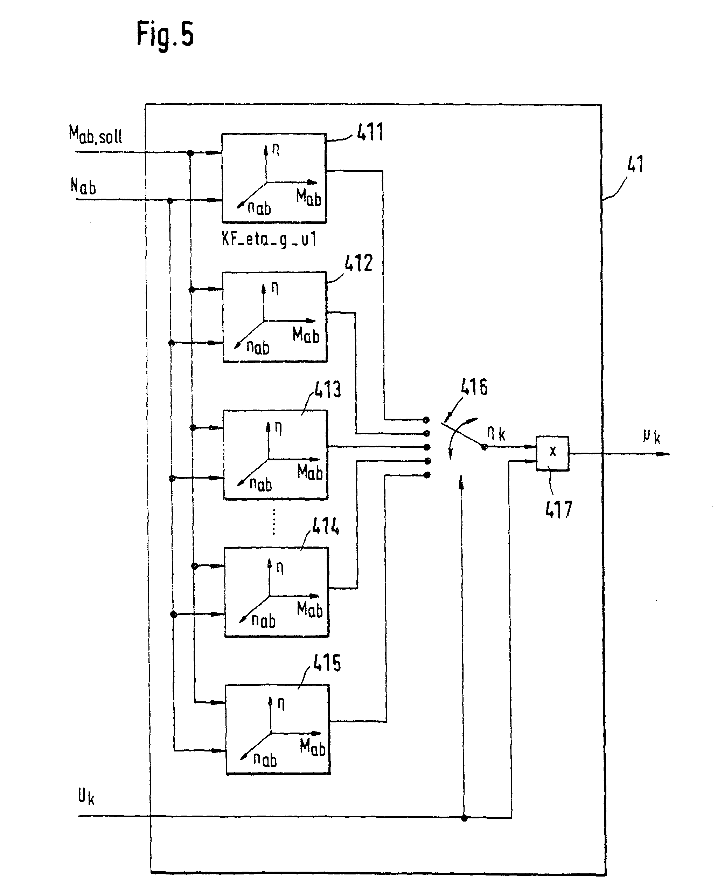

Das Vorgehen zur Bestimmung von $b_{e\_t,k}$ ist in der Figur 4 dargestellt. Zur Beschreibung der Figur 4 soll zunächst auf den dortigen Block 41 (Kenndaten Getriebe) näher eingegangen werden, der anhand der Figur 5 beschrieben wird.

Dem Block 41 (Fig.4 und 5) werden sowohl Sollwerte $M_{ab,soll}$ für das Antriebsmoment als Werte $N_{ab}$ für die Getriebeausgangsdrehzahl zugeführt. Zu jeder Getriebeübersetzung $u_1$, $u_2$, ......,$u_K$ gehören Kennfelder KF_eta_g_u1, ......, KF_eta_g_uK (Blöcke 411 bis 415), die die Wirkungsgradcharakteristik des Getriebes beinhalten. In diesen Kennfeldern KF_eta_g_u1, ......, KF_eta_g_uK (Blöcke 411 bis 415) ist der Getriebewirkungsgrad $\eta$ in Abhängigkeit vom Getriebeausgangsmoment $M_{ab}$ und der Getriebeausgangsdrehzahl $N_{ab}$ für unterschiedliche Getriebeübersetzungen $u_1$, $u_2$, ......, $u_K$ gespeichert.

Durch die als Schalter dargestellte Auswahl 416 erfolgt, je nach Übersetzung $u_k$, die Bildung des für die Übersetzung $u_k$ relevanten Wirkungsgrades $\eta_k$.

Statt der in der Figur 5 dargestellten Auswahl aus diskreten Werten für den Wirkungsgrad erfolgt vorteilhafterweise bei stufenlos verstellbaren Getrieben eine Interpolation zwischen jeweils zwei benachbarten Werten für den Wirkungsgrad.

Durch die Multiplikation 417 des so gebildeten Wertes $\eta_k$ für den Wirkungsgrad mit der jeweils betrachteten Übersetzung $u_k$ ergibt sich die Momentenverstärkung $\mu_k$.

Wie in der Figur 4 zu sehen ist wird aus der Momentenverstärkung $\mu_k$ und dem Getriebeausgangsmoment $M_{ab}$ durch die Division 42 das für die jeweilige Übersetzung $u_k$ gültige Soll-Motormoment $M_{mot,soll,k}$ ermittelt. Mittels der Multiplikation 44 erhält man aus der jeweiligen Übersetzung $u_k$ und der Getriebeausgangsdrehzahl $N_{ab}$ den zugehörigen Wert $N_{mot,k}$ für die Motordrehzahl.

Die Werte $M_{mot,soll,k}$ und $N_{mot,k}$ werden dem Block 43 der Figur 4 zugeführt, der das Motorverbrauchsfeldkennfeld enthält. Hieraus wird dann der zu den Eingangswerten $N_{mot,k}$ und $M_{mot,soll,k}$ gehörige Kraftstoffverbrauch $b_{e\_t,k}$ je Zeiteinheit bestimmt. Ein Motorkennfeld ist in der Fig.6 beispielhaft dargestellt.

In der Figur 6 ist das Drehmoment des Fahrzeugmotors $M_{mot}$ über der Motordrehzahl $N_{mot}$ aufgetragen. Der Parameter ist hierbei der spezifische Kraftstoffverbrauch, d.h der Kraftstoffverbrauch pro Zeiteinheit. Die mit dem Buchstaben E gekennzeichnete Linie stellt die optimale Motordrehzahl für einen verbrauchsorientierten unter Berücksichtigung des Kraftstoffverbrauchs dar. Die Linie für den verbrauchsorientierten Fahrertyp läuft durch den Punkt geringsten Kraftstoffverbrauchs (100%). Mit dem Buchstaben M ist in der Figur 6 das bei der jeweiligen Motordrehzahl erreichbare maximale Drehmoment eingezeichnet.

Das schon erwähnte Kennfeld im Block 10551 der Figur 3 enthält für jede Kombination $M_{ab,soll}$ und $N_{ab}$ die Motordrehzahl $N_{mot,opt,E}$, bei der der Kraftstoffverbrauch $b_{e\_t,k}$ je Zeiteinheit minimal ist.

Das hier für einen minimalen Kraftstoffverbrauch gezeigte Optimierungsverfahren läßt sich analog auch für eine maximale Momentenreserve durchführen. Das Optimierungskriterium für das Kennfeld im Block 10552 der Figur 3 ist dann die Momentenreserve $M_k$.

Weitere Optimierungskriterien wie beispielsweise geringst mögliche Emissionen lassen sich auch mit diesem Verfahren berücksichtigen.

Die Ermittlung der Kennfelder 10551 und 10552 sowie weiterer Kennfelder) kann also durch die beschriebene Offline-Optimierungsrechnung erfolgen. Es kann aber auch vorgesehen sein, daß die Ermittlung der Motordrehzahl-Sollwerte $N_{mot,opt,E}$ und $N_{mot,opt,XS}$ durch die beschriebene Optimierungsrechnung online erfolgt.

Wie schon erwähnt wird im Block 10553 der Fig.3 einer der gebildeten Sollwerte $N_{mot,opt,E}$ oder $N_{mot,opt,XS}$ für die Motordrehzahl abhängig von dem im Block 1051 bestimmten Fahrereigenschaft FT als Sollwert $N_{mot,opt,FT}$ ausgewählt.

Ist nun, wie anhand der Figur 3 beschrieben, die unter Berücksichtigung des Fahrertyps und des Vortriebswunsches optimale Motordrehzahl $N_{mot,opt,FT}$ in Block 1055 gefunden, so wird diese Motordrehzahl im Block 1056 abhängig von der Fahrsituation modifiziert. Die Fahrsituation wird dabei im Block 1052 in an sich bekannter Weise ermittelt. Im Block 1057 kann das im Block 1056 modifizierte Drehzahlsignal begrenzt werden. Insbesondere ist vorgesehen, daß die Begrenzung abhängig von dem im Block 1053 in an sich bekannter Weise ermittelten Fahrzustand (Signal FZ) und abhängig von dem im Block 1054 ermittelten Momenten- bzw. Leistungsforderung der Nebenaggregate (Signal $P_{NA}$) stattfindet. Die so ermittelte optimale Motordrehzahl $N_{mot,opt}$ wird dem schon beschriebenen Block 107 zugeführt. Der Grundgedanke des Blocks 105 ist also, zunächst eine optimale Motordrehzahl als Funktion der Fahrereigenschaft zu bestimmen und diese dann durch die Fahrsituation, den Fahrzustand oder durch die Momentenforderung von Nebenaggregaten zu modifizieren. So kann beispielsweise bei einer Bergabfahrt zur Erhöhung des Schleppmoments eine höhere Motordrehzahl optimal sein. Zusätzlich kann beispielsweise im Warmlauf des Fahrzeugmotors die Mindestdrehzahl, die über die Getriebeübersetzung am Motor eingestellt wird, einen höheren Wert haben als bei einem betriebswarmen Motor. Analog kann beispielsweise im Stadtfahrbetrieb die Motordrehzahl durch die Getriebeübersetzung auf einen maximalen Wert begrenzt werden, wodurch die Lärm- und Abgasemission reduziert wird. Zudem kann beispielsweise ein Nebenaggregat wie die Lichtmaschine oder die Klimaanlage eine erhöhte Motordrehzahl auch außerhalb des Leerlaufs anfordern, die durch eine entsprechende Getriebeübersetzung einzustellen ist.

Durch die Erfindung werden Getriebeeinflüsse bei der Ermittlung der optimalen Getriebeübersetzung innerhalb eines Systems zur koordinierten Antriebsstrangsteuerung berücksichtigt. Der sich daraus ergebende Vorteil ist die prinzipielle Möglichkeit, durch Optimierung des Gesamtwirkungsgrades, der Momentenreserve und anderer Optimierungskriterien den Antriebstrang den Bedürfnissen besser anzupassen.

**Patentansprüche**

1. System zur Einstellung eines in seiner Übersetzung veränderbaren Kraftfahrzeuggetriebes (112), das eine übersetzungsabhängige Wirkungsgradcharakteristik aufweist, bei dem

   - eine die aktuelle Getriebeausgangsdrehzahl repräsentierende erste Größe ($N_{ab}$) erfasst wird,
   - eine einen Sollwert für das Antriebsmoment repräsentierende zweite Größe ($M_{ab,soll}$) ermittelt wird,
   - wenigstens abhängig von der erfassten ersten und der ermittelten zweiten Größe und abhängig von der Wirkungsgradcharakteristik des Getriebes (112) die Übersetzung ($u_{soll}$) des Getriebes (112) eingestellt wird,

   **dadurch gekennzeichnet,**

   - **dass** für Kombinationen aus der erfassten ersten und der ermittelten zweiten Größe ($N_{ab}$, $M_{ab,soll}$) eine Soll-Drehzahl ($N_{mot,opt}$) des Fahrzeugmotors (111) ermittelt wird, bei der wenigstens ein Fahrzeugmotorparameter ($b_{e\_t,k}$) wie Kraftstoffverbrauch, Momentenreserve und/oder Abgasemission im minimalen oder maximalen Sinne optimiert ist und
   - abhängig von der so bestimmten Soll-Drehzahl ($N_{mot,opt}$) des Fahrzeugmotors die Überset-

zung ($u_{soll}$) des Getriebes (112) eingestellt wird.

2. System nach Anspruch 1, **dadurch gekennzeichnet, daß** die Bestimmung der Soll-Drehzahl ($N_{mot,opt}$) durch wenigstens ein Kennfeld (10551, 10552) geschieht.

3. System nach Anspruch 1 oder 2, **dadurch gekennzeichnet, daß** zur Bestimmung der Soll-Drehzahl ($N_{mot,opt}$) des Fahrzeugmotors (111) oder zur Ermittlung des Kennfeldes (10551, 10552) die Momentenverstärkungs- und/oder Wirkungsgradcharakteristika des Getriebes (112) für unterschiedliche Getriebeübersetzungen ($u_k$) herangezogen werden.

4. System nach Anspruch 3, **dadurch gekennzeichnet, daß** die Momentenverstärkungs und/oder Wirkungsgradcharakteristika als Kennfelder (411-415) vorliegen und die Momentenverstärkung ($\mu_k$) und/ oder der Wirkungsgrad ($\eta_k$) des Getriebes (112) in Abhängigkeit von der ersten und zweiten Größe ($N_{ab}$, $M_{ab,soll}$) aus den vorliegenden Kennfeldern (411-415) bestimmt werden.

5. System nach Anspruch 4, **dadurch gekennzeichnet, daß** die Bestimmung der Soll-Drehzahl ($N_{mot,opt}$) des Fahrzeugmotors (111) oder die Ermittlung des Kennfeldes (10551, 10552) derart geschieht, daß aus den vorliegenden Kennfeldern (411-415) des Getriebes (112) für unterschiedliche Getriebeübersetzungen ($u_k$) die zugehörigen Momentenverstärkungen ($\mu_k$) und/oder Wirkungsgrade ($\eta_k$) des Getriebes (112) ermittelt werden und für ein kontinuierlich in seiner Übersetzung veränderbares Getriebe zwischen den ermittelten Momentenverstärkungen und/oder Wirkungsgraden interpoliert wird.

6. System nach Anspruch 1 und 3, **dadurch gekennzeichnet, daß** der zu optimierende Parameter ($b_{e\_t,k}$) des Fahrzeugmotors als Motorkennfeld (43) in Abhängigkeit von wenigstens der Motordrehzahl ($N_{mot,k}$) und des Motorausgangsmoments ($M_{mot,soll,k}$) vorliegt und

- für unterschiedliche Getriebeübersetzungen ($u_k$) zu unterschiedlichen ersten und zweiten Größen ($N_{ab}$, $M_{ab,soll}$) mittels der Momentenverstärkungs und/oder Wirkungsgradcharakteristika die zugehörigen Momentenverstärkungen ($\mu_k$) und/oder die zugehörigen Wirkungsgrade ($\eta_k$) ermittelt werden und
- unter Berücksichtigung der ermittelten zugehörigen Momentenverstärkungen ($\mu_k$) und/oder zugehörigen Wirkungsgrade ($\eta_k$) die zu der ersten Größe ($N_{mot,k}$) gehörigen Motorausgangsmomente ($M_{mot,soll,k}$) für die unterschiedlichen

Getriebeübersetzungen ($u_k$) ermittelt werden und

- mittels des vorliegenden Motorkennfeldes Werte ($b_{e\_t,k}$) des zu optimierenden Parameters ermittelt werden und
- die ermittelten Werte ($b_{e\_t,k}$) zur Bestimmung der Soll-Drehzahl ($N_{mot,opt}$) des Fahrzeugmotors herangezogen werden.

7. System nach Anspruch 1, **dadurch gekennzeichnet, daß** die zweite Größe ($M_{ab,soll}$) wenigstens in vorgebbaren Betriebszuständen abhängig von einer die Stellung des vom Fahrer betätigten Fahrpedals repräsentierenden Größe ermittelt wird.

8. System nach Anspruch 1, **dadurch gekennzeichnet, daß** der zu optimierende Fahrzeugmotorparameter ($b_{e\_t,k}$) wählbar ist.

**Claims**

1. System for setting a motor vehicle gearbox (112) which has a variable transmission ratio and which has a transmission-ratio-dependent efficiency characteristic, in which

- a first variable ($N_{ab}$) which represents the current output speed of the gearbox is sensed,
- a second variable ($M_{ab,setp}$) which represents a setpoint value for the drive torque is determined,
- the transmission ratio ($u_{setp}$) of the gearbox (112) is set at least as a function of the sensed first variable and the determined second variable and as a function of the efficiency characteristic of the gearbox (112), **characterized**
- **in that** a setpoint rotational speed ($N_{mot,opt}$) of the vehicle engine (111) is determined for combinations of the sensed first variable ($N_{ab}$) and the determined second variable ($M_{ab,setp}$), in which at least one vehicle engine parameter ($b_{e\_t,k}$) such as fuel consumption, torque reserve and/or exhaust gas emission is optimized in the minimum or maximum sense, and
- the transmission ratio ($u_{setp}$) of the gearbox (112) is set as a function of the setpoint rotational speed ($N_{mot,opt}$), determined in this way, of the vehicle engine.

2. System according to Claim 1, **characterized in that** the setpoint rotational speed ($N_{mot,opt}$) is determined by means of at least one characteristic diagram (10551, 10552).

3. System according to Claim 1 or 2, **characterized in that**, in order to determine the setpoint rotational speed ($N_{mot,opt}$) of the vehicle engine (111) or in order to determine the characteristic diagram (10551, 10552), the torque amplification characteristic and/or efficiency characteristic of the gearbox (112) are used for different gearbox transmission ratios ($u_k$).

**4.** System according to Claim 3, **characterized in that** the torque amplification characteristic and/or efficiency characteristic are present as characteristic diagrams (411 - 415) and the torque amplification ($\mu_k$) and/or the efficiency ($\eta_k$) of the gearbox (112) are determined as a function of the first and second variables ($N_{ab}$, $M_{ab,setp}$) from the characteristic diagrams (411 - 415) which are present.

**5.** System according to Claim 4, **characterized in that** the setpoint rotational speed ($N_{mot,opt}$) of the vehicle engine (111) or the characteristic diagram (10551, 10552) is determined in such a way that the associated torque amplifications ($\mu_k$) and/or efficiencies ($\eta_k$) of the gearbox (112) are determined from the characteristic diagrams (411 - 415) of the gearbox (112) which are present for different gearbox transmission ratios ($u_k$), and interpolation is carried out between the determined torque amplifications and/or efficiencies for a gearbox which has a continuously variable transmission ratio.

**6.** System according to Claims 1 and 3, **characterized in that** the parameter ($b_{e\_t,k}$) of the vehicle engine which is to be optimized as a engine characteristic diagram (43) is present as a function of at least the engine speed ($N_{mot,k}$) and the engine output torque ($M_{mot,setp,k}$), and

- the associated torque amplifications ($\mu_k$) and/or the associated efficiencies ($\eta_k$) are determined for different gearbox transmission ratios ($u_k$) for different first and second variables ($N_{ab}$, $M_{ab,setp}$) by means of the torque amplification characteristic and/or efficiency characteristic, and
- the engine output torques ($M_{mot,setp,k}$) which are associated with the first variable ($N_{mot,k}$) are determined for the different gearbox transmission ratios ($u_k$) taking into account the determined associated torque amplifications ($\mu_k$) and/or associated efficiencies ($\eta_k$), and
- values ($b_{e\_t,k}$) of the parameter which is to be optimized are determined by means of the engine characteristic diagram which is present, and
- the determined values ($b_{e\_t,k}$) are used to determine the setpoint rotational speed ($N_{mot,opt}$) of the vehicle engine.

**7.** System according to Claim 1, **characterized in that** the second variable ($M_{ab,setp}$) is determined at least in predeterminable operating states as a function of a variable which represents the position of the accelerator pedal which is actuated by the driver.

**8.** System according to Claim 1, **characterized in that** the vehicle engine parameter ($b_{e\_t,k}$) which is to be optimized can be selected.

## Revendications

**1.** Système pour le réglage du rapport de transmission d'une boîte de vitesses (112) présentant une caractéristique de rendement dépendant de la transmission, dans laquelle :

- on capte une première grandeur ($N_{ab}$) représentant la vitesse de rotation de sortie actuelle de la boîte de vitesses,
- on détermine une seconde grandeur ($M_{ab,soll}$) qui représente une valeur de consigne pour le couple d'entraînement.
- on régle au moins en fonction de la première grandeur captée et de la seconde grandeur déterminée et en fonction de la caractéristique de rendement de la boite de vitesses (112), la transmission ($u_{soll}$) de la boîte de vitesses (112),

**caractérisé en ce que**
pour la combinaison de la première grandeur captée et de la seconde grandeur déterminée ($N_{ab}$, $M_{ab,soll}$), on détermine une vitesse de rotation de consigne ($N_{mot,opt}$) du véhicule (111) pour laquelle on optimise dans le sens du minimal ou du maximal, au moins un paramètre du moteur du véhicule ($b_{e\_t,k}$) tel que la consommation de carburant, la réserve de couple et/ou l'émission de gaz d'échappement et

- en fonction de la vitesse de rotation de consigne ($N_{mot,opt}$) ainsi déterminée pour le moteur du véhicule, on règle la transmission ($u_{soll}$) de la boîte de vitesses (112).

**2.** Système selon la revendication 1, **caractérisé en ce que** la détermination de la vitesse de rotation de consigne ($N_{mot,opt}$) se fait à l'aide d'au moins un champ de caractéristiques (10551, 10552).

**3.** Système selon la revendication 1 ou 2, **caractérisé en ce que** pour déterminer la vitesse de rotation de consigne ($N_{mot,opt}$) du moteur du véhicule (111) ou pour déterminer le champ de caractéristiques (10551, 10552) on extrait l'augmentation du couple et/ou les caractéristiques de rendement de la boîte de vitesses (112) pour différentes transmissions de boîte de

vitesses ($u_k$).

4. Système selon la revendication 3,
   **caractérisé en ce que**
   l'augmentation de couple moteur et/ou des caractéristiques de rendement sont disponibles sous la forme de champs de caractéristiques (411, 415) et l'augmentation de couple ($\mu_k$) et/ou le rendement ($\eta_k$) de la boîte de vitesses (112) sont déterminés en fonction de la première et de la seconde grandeur ($N_{ab}$, $M_{ab,soll}$) à partir des champs de caractéristiques (411-415) disponibles.

5. Système selon la revendication 4,
   **caractérisé en ce que**
   la détermination de la vitesse de rotation de consigne ($N_{mot,opt}$) du moteur du véhicule (111) ou la détermination du champ de caractéristiques (10551, 10552) se fait de sorte qu'à partir des champs de caractéristiques disponibles (411-415) de la boîte de vitesses (112) pour différents rapports de boite de vitesses ($u_k$), les augmentations de couple correspondantes ($\mu_k$) et/ou rendements ($\eta_k$) de la boite de vitesses (112) sont déterminés, et interpolés pour une boîte de vitesses pouvant être modifiée en continu dans sa transmission entre l'augmentation de couple déterminée et/ou de rendements.

6. Système selon la revendication 1 ou 3,
   **caractérisé en ce que**
   le paramètre à optimiser ($b_{e\_t,k}$) du moteur du véhicule est disponible en tant que caractéristique moteur (43) en fonction d'au moins la vitesse de rotation ($N_{mot,k}$) et le couple de sortie du moteur ($M_{mot,soll,k}$) et

   - pour différente rapports de transmission ($u_k$) pour différentes première et seconde grandeurs ($N_{ab}$, $M_{ab,soll}$), on détermine au moyen de l'augmentation de couple et/ou des caractéristiques de rendement, l'augmentation de couple correspondante ($\mu_k$) et/ou le rendement correspondant ($\eta_k$),
   - on détermine en tenant compte de l'augmentation de couple correspondante ($\mu_k$) et/ou du rendement correspondant ($\eta_k$), le couple de sortie du moteur ($N_{mot,soll,k}$) appartenant à la première grandeur ($N_{mot,k}$) pour les différentes transmissions de boîte de vitesses ($u_k$) et
   - on détermine au moyen des champs de caractéristiques moteurs disponibles, les valeurs ($b_{e\_t,k}$) du paramètre à optimiser et
   - les valeurs déterminées ($b_{e\_t,k}$) sont utilisées pour déterminer la vitesse de rotation de consigne ($N_{mot,opt}$) du moteur du véhicule.

7. Système selon la revendication 1,
   **caractérisé en ce que**

la seconde grandeur ($M_{ab,soll}$) est déterminée au moins dans des états d'utilisation prédéterminés en fonction d'une grandeur représentant la position de la pédale d'accélérateur actionnée par le conducteur.

8. Système selon la revendication 1,
   **caractérisé en ce que**
   le paramètre de moteur de véhicule ($b_{e\_t,k}$) peut être choisi.

Fig.1

EP 0 980 483 B1

Fig.2

Fig.3

EP 0 980 483 B1

104

106

1051

1055

$M_{ab,soll}$

$N_{ab}$

Bestimmung von $N_{mot,opt,E}$ — 10551

$N_{mot,opt,E}$

FT

Bestimmung von $N_{mot,opt,E}$

$N_{mot,opt,FT}$

10553

$M_{ab,soll}$

$N_{ab}$

Bestimmung von $N_{mot,opt,XS}$

$N_{mot,opt,XS}$

10552

# Fig.4

## Fig.5

## Fig.6